Europäisches Patentamt

European Patent Office

Office européen des brevets

(11) Publication number: **0 355 925**
**A1**

## EUROPEAN PATENT APPLICATION

(21) Application number: **89202126.2**

(22) Date of filing: **22.08.89**

(51) Int. Cl.⁴: **G11B 7/26 , G11B 23/00 , B29D 17/00 , G11B 3/70**

(30) Priority: **23.08.88 NL 8802081**

(43) Date of publication of application:
**28.02.90 Bulletin 90/09**

(84) Designated Contracting States:
**AT BE CH DE ES FR GB IT LI LU NL SE**

(71) Applicant: **NAGRON PRECISION TOOLING B.V.**
**Kanaaldijk z.w. 7B**
**NL-5706 LD Helmond(NL)**

(72) Inventor: **Van Poorten, Anthonius**
**Suezlaan 22**
**NL-5752 BG Deurne(NL)**

(74) Representative: **Smulders, Theodorus A.H.J.,**
**Ir. et al**
**Vereenigde Octrooibureaux Nieuwe Parklaan**
**107**
**NL-2587 BP 's-Gravenhage(NL)**

(54) A method of making a carrier with optically readable, digitable information.

㊼ A method of making a carrier with optically readable, digital information, such as a "compact disc". A master (1) is provided eccentrically with a series of spiral-shaped information tracks (2) in relief, followed by making from said master disc a disc-shaped nickel impression, and placing said nickel impression in an injection moulding die to form the carrier from synthetic plastic material. Preferably, the master disc is a disc-shaped holder (1) which includes a series of chamber-like recesses (2) each the size of the ultimate carrier, and a spiral-shaped information track (9) is provided in relief on a series of discs, which are subsequently placed in the recesses of the holder.

FIG.1

## A method of making a carrier with optically readable, digitable information

This invention relates to a method of making a carrier with optically readable, digital information, such as a "compact disc", which comprises providing on a master disc a spiral-shaped information track in relief, subsequently making from said master disc a disc-shaped nickel impression, and placing said nickel impression in an injection moulding die to form the carrier from synthetic plastics material.

Carriers with optically readable, digital information are provided with a spiral-shaped track consisting of reflecting and non-reflecting, or at least less reflecting, areas or "pits", formed in relief in the synthetic plastics material of the carrier, and beginning a short distance from the edge of the carrier, or in the centre thereof. The spiral-shaped track terminates a short distance from the centre of the carrier, or adjacent to the edge thereof. This track can be scanned by means of a laser beam, to provide a series of digitized pulses which, in turn, can be converted into image, sound, or text. The carriers are commonly made in large numbers by injection moulding in a die. In this process, it is of great importance that the disc-shaped nickel impression has as long a service life as possible and that the injection moulding process has as short a cycle period as possible.

It is an object of the present invention to provide a method having a considerably shorter cycle period than the prior method described above, and is characterized to that effect by forming on said master disc a series of spiral-shaped information tracks with the centre of each spiral-shaped track being located outside the centre of said master disc.

If a master disc is provided with four spiral-shaped information tracks, the cycle period of the injection moulding process, will be reduced per carrier, by a factor of about 4, while of course the diameter of the resulting carriers is smaller and with circular carriers will be approximately 1/2 to 1/3 of the diameter of the master disc.

In addition to the advantage of a shorter cycle period, a higher production flexibility is obtained. In fact, one and the same injection moulding die can be used for making one single carrier per cycle or a multiple carrier provided with a series of spiral-shaped information tracks, which according to a further elaboration of the method, is subjected to a cutting operation to produce smaller, single carriers with only one spiral-shaped information track.

The single carrier thus obtained has a higher information density per unit area, because the edge and centre areas of a conventional carrier, which are usually unsuitable for use on the ground of inferior reflection characteristics, can be reduced. In fact, the series of spiral-shaped information tracks can be provided in the annular area located between the edge and the centre of the conventional carrier, which area has the desired reflection characteristics.

The method according to the invention will now be described in more detail which reference to the accompanying drawing. In said drawing:

Fig. 1 shows a diagrammatic plan view of a carrier having four circular areas, each provided with a spiral-shaped information track;

Fig. 2 shows a diagrammatic view similar to Fig.1 of a carrier having a different external shape;

Fig. 3 shows a seotional view, combined with a top plan view of a (half) master disc.

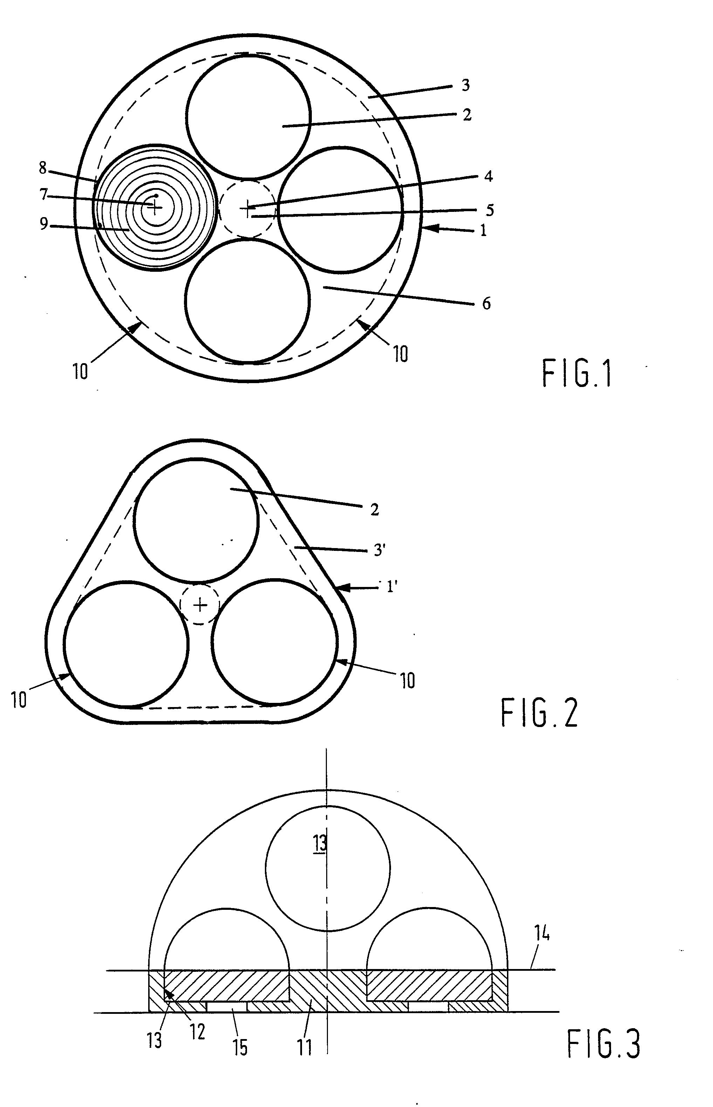

In Fig. 1, reference numeral 1 designates a carrier as is obtained using the known and conventional method. This carrier consists of a marginal area 3, a central area 5 and an annular area 6 located intermediate areas 3 and 5. In the conventional carrier 1, there is one spiral-shaped information track in this annular area 6, beginning at edge 8 adjacent to the marginal area 3, and terminating at the circumference of the central area 5. Alternatively, the information track extends from the centre to the marginal area 3 of the carrier. The marginal area 3 and the central area 5 are unsuitable for forming an information track therein, because the reflection characteristics of the carrier in the areas 3 and 5 do not satisfy standard requirements.

In accordance with the present invention, four areas 2 are present within ring 6, each provided with a spiral-shaped information track 9 extending from edge 8 of area 2 to the centre 7 thereof. By cutting the four areas 2 out of carrier 1, four carriers of smaller size are obtained, whose diameter ranges from 1/2 to 1/3 of the diameter of carrier 1. As the entire surface of areas 2 is within the area of ring 6, this entire area has suitable reflection characteristics. As a result, the spiral-shaped information track 9 can be provided closer to the edge 8 of area 2, and the central area 7 can be made smaller relative to the diameter of area 2. Per unit area, therefore, the information density of the smaller carriers, of the size of area 2, is higher than the information density of carrier 1.

As the spiral-shaped information track is no longer placed about the centre of carrier 1, it is no longer necessary to start from a circular carrier. Fig. 2 illustrates a triangular carrier 1', in which three areas 2' are shown, each provided with a spiral-shaped information track 9 (not shown). By providing one or more cut-outs 10 in the marginal area 3 or 3' of carrier 1, 1', the carrier 1, 1' can be readily oriented for carrying out the cutting operation.

The provision of a spiral-shaped information track on a circular master disc, from the edge thereof to the centre, or the other way around, is mechanically relatively simple. The master disc can be caused to rotate at a fixed speed and the "writing head" for providing the information track can be driven with a uniform speed according to a radial line containing the centre of the master disc. In providing a series of spiral-shaped information tracks on a master disc, where the centre of each track is located outside the centre of the master disc, the drive of the "writing head" has become considerably more complicated, because the spiral movement can no longer be split or divided over master disc and "writing head". The "writing head" itself has to be driven in accordance with a complex spiral-shaped movement. If, in one way or another, in making, for example, the fourth information track on the master disc an error is made, the master disc in its totality has become unfit for use.

It is advantageous, therefore, for the master disc to be formed as a composite part, (Fig. 3) consisting of four separate discs 13, of the size of the ultimate carrier 2, fitted in a circular holder 11 having recesses 12 therein for receiving the four separate discs 13.

The manufacture of a disc-shaped nickel impression is effected as follows:

In a holder 11, which for example is of a circular shape, and is provided with four chamber-like recesses 12, discs 13 are placed. The upper surface 14 of holder 11 and discs 13 is polished and provided with a sensitive layer. Discs 13 are subsequently pressed out of holder 11 through apertures 15, and subsequently each provided with a spiral-shaped information track and re-positioned in holder 11. Thereafter a disc-shaped nickel impression is made in the conventional manner, which can be placed in an injection moulding die to form a carrier of synthetic plastics material as illustrated in Fig. 1.

## Claims

1. A method of making a carrier with optically readable, digital information, such as a "compact disc", which comprises providing on a master disc a spiral-shaped information track in relief, subsequently making from said master disc a disc-shaped nickel impression, and placing said nickel impression in an injection moulding die to form the carrier from synthetic plastic material, characterized by forming on said master disc a series of spiral-shaped information tracks (9) with the centre of each spiral-shaped track being located outside the centre (4) of said master disc (1).

2. A method as claimed in claim 1, characterized in that the master disc is composed of a disc-shaped holder (11) which includes a series of chamber-like recesses (12) each the size of the ultimate carrier (2), and a spiral-shaped information track is provided in relief on a series of discs (13), which are subsequently placed in the recesses (12) of said holder.

3. A method according to claim 1 or 2, characterized by forming from the carrier (1) provided with a series of spiral-shaped information tracks (9) a series of separate carriers (2) by means of a cutting operation, each of said carriers being provided with one information track (9).

4. A method according to anyone of claims 1-3, characterized in that the carrier (1) provided with a series of spiral-shaped information tracks (9) has a shape deviating from a circle.

5. A method according to claim 4, characterized in that the carrier (1) provided with a series of a spiral-shaped information tracks (9) has a substantially triangular form with rounded corners.

6. A method according to anyone of claims 1-5, characterized in that one or more cut-outs (10) are provided in the marginal zone (3) of the carrier (1).

FIG.1

FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | US-A-3072519 (SALZMAN) --- | | G11B7/26 |
| A | FR-A-2089024 (MATUSCHKE) --- | | G11B23/00 B29D17/00 |
| A | EP-A-067095 (EASTMAN KODAK COMPANY) --- | | G11B3/70 |
| A | EP-A-175408 (N.V. PHILIPS GLOEILAMPENFABRIEKEN.) --- | | |
| A | EP-A-239893 (UNISYS CORPORATION) ----- | | |

TECHNICAL FIELDS SEARCHED (Int. Cl.5 )

G11B
B29D

The present search report has been drawn up for all claims

| Place of search | Date of completion of the search | Examiner |
|---|---|---|
| THE HAGUE | 01 DECEMBER 1989 | BENFIELD A.D. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)